# EUROPEAN PATENT SPECIFICATION

(11) **EP 1 993 301 B1**
(45) Date of publication and mention of the grant of the patent: **15.07.2009**
(21) Application number: 07108282.0
(22) Date of filing: 15.05.2007
(51) Int. Cl.: H04W 84/18

(54) **Method and apparatus of operating a wireless home area network**
Verfahren und Vorrichtung zum Betreiben eines drahtlosen Heimnetzwerkes
Appareil et procédé de fonctionnement d'un réseau local sans fil

(43) Date of publication of application: 19.11.2008
(73) Proprietor: NTT DoCoMo, Inc., Tokyo (JP)
(72) Inventor: Kounga, Gina, 81245 Munich (DE); Prasad, Anand, 80689 Munich (DE)
(74) Representative: Betten & Resch

(56) References cited:
- EP-A2- 1 324 541
- WO-A-20/06003532
- WO-A-20/06008695
- US-A1- 2004 157 584
- US-B1- 6 886 095
- ANAND R. PRASAD: "Securing Mesh Networks: A Novel Solution for Home Scenario" COMMUNICATION SYSTEMS SOFTWARE AND MIDDLEWARE, [Online] 7 January 2007 (2007-01-07), - 12 January 2007 (2007-01-12) pages 1-5, XP002456530 ISBN: 1-4244-0614-5 Retrieved from the Internet: URL:http://ieeexplore.ieee.org/iel5/426795 4/4267955/04268022.pdf?tp=&isnumber=426795 5&arnumber=4268022> [retrieved on 2007-10-25]

## Description

### FIELD OF INVENTION

The present invention relates to a method and an apparatus for operating a wireless home Area network.

### BACKGROUND OF THE INVENTION

Wireless Home Area Networks (WHANs) are already existing and will be even more strongly present in future homes. The solutions today rely mostly on the ability of the users, the weakest link, to setup security and on the Wi-Fi security solution that is known to be insufficient. Thus secure WHAN solutions must be defined to prevent abusive use of home devices by intruders or to prevent intruders from tracking communications established in users' homes. Since all users may not have the knowledge required to setup and to manage the security of a WHAN, the solution that have to be defined must permit any user to set up its secure WHAN quickly and easily and also, to manage it easily.

Some approaches known so far are listed below.

IEEE 802.11i (see IEEE Std 802.11i^{™}-2004, "Amendment 6: Medium Access Control (MAC) Security Enhancements.") standard defines the security of wireless 802.11 networks. However it does not specifies a solution to setup and manage a wireless network.

The resurrection of duckling nodes (F. Stajaon, "The Resurrecting Duckling - What Next? Security Protocols," 8^{th} International Workshop, LNCS, 2000) defines how a secret key can be transmitted with a physical contact to devices in a wireless network. However, initial key distribution is only part of the issues when one has to setup a secure WHAN. Other issues are key update, authorization management, secure communications from the WHAN to the Internet and secure communications from the internet to the WHAN.

i-Plum(Anand R. Prasad, "Securing Mesh Networks: A Novel Solution for Home Scenario," COMSWARE 2007, 7-12 Jan. 2007, Bangalore, India) was defined to fulfill a similar goal as the present invention. However, the solution is rather complicated since it requires security parameters to be sent by the network operator to a device freshly arrived in the WHAN and these parameters to be distributed by that new device to all the other devices in the network. It would be preferable to have a solution which permits arrivals and departures of new devices in or from the network to be automatically managed by the WHAN without help from a third party.

WO 2006/003532 discloses an authentication method for medical wireless ad-hoc network nodes. Any node A in the ad-hoc network may act as a trusted portal where a network node may register. An intra-domain trust and key distribution means or protocl allows the reference node A to send a key associated to the identity of the trusted node B to another trusted node C when both nodes are included in the trusted TP-domand of node A.

### SUMMARY OF THE INVENTION

According to one embodiment there is provided method for operating a wireless home access network (WHAN), said network comprising:
a communication management device for managing the communication within said WHAN by allowing or refusing communication between the devices belonging to said WHAN and/or between a device of said WHAN and the outside;
a configuration device for configuring the devices belonging to said WHAN comprising a short range communication interface;
a plurality of network devices, whereas said communication management device further comprises a management database for storing management data related to the operation of said WHAN network, said management data comprising for each of said plurality of devices its device ID and its corresponding secret key, whereas said method comprises:
   distributing a secret key from said configuration device to one of said plurality of devices via said short range communication interface in order to add it to the WHAN;
   sending a configuration message from said configuration device to said communication management device which contains configuration information about the device to which said secret key has been sent; and
   entering said configuration information into said management database of said communication management device.

The distribution of the secret keys to the devices of the network via a short range communication interface makes an attack on the network and the key distribution difficult. Moreover, the addition of new devices to the network can be performed easily without contacting the provider while nevertheless maintaining security.

According to one embodiment said communication management device and said configuration device are able to securely communicate with each other by a set of keys comprising one or more keys, and/or
said configuration device being a mobile phone with said one or more keys enabling it to communicate with said communication management device being stored on a Smartcard (e.g. a SIM card).

The one ore more keys may be installed e.g. before sales of the communication management device and the configuration device, e.g. by the service provider (such as a network operator). The one or more keys may e.g. be a private/public key pair for each of the communication management device and the configuration device. Alternatively symmetric keys may be used which may be defined and installed before shipping for communication between the communication management device and the configuration device, and e.g. a different symmetric key for the communication between the communication management device and the service provider and a further key for the communication between the configuration device and the service provider. The keys may be stored on a Smartcard (in case of the configuration device) or a UICC device (in case of the communication management device).

Using a mobile phone as a communication device is particularly advantageous because the network operator may then make use of all its existing infrastructure for configuring the configuration device (through a Smartcard and special applications), moreover it is a device almost all users know well.

According to one embodiment the method comprises:
if one of said plurality of devices wants to communicate with another one of said plurality of devices:
   sending a request to said communication management device;
   choosing a session key for said two devices by said communication management device;
   encrypting the session keys by using the secret keys of said devices and forwarding the session key to said devices to enable them to communicate using said session key.

In this manner a secure communication can be established easily based on the existing long-term keys of the devices.

According to one embodiment said management database comprises an authorization control list which specifies for each of said plurality of devices with which others of said plurality of devices it is allowed to communicate, and said method further comprising:
verifying by said communication management device by checking said authorization control list whether the two devices are allowed to communicate with each other.

In this manner the communication between devices and a device and the outside can be limited according to the policy set by the administrator through the configuration device.

According to one embodiment said authorization control list comprises an entry corresponding to a status of said device to distinguish between a permanent device and an invited device which is allowed to participate in said WHAN only until a certain expiration date.

This makes it possible to temporarily admit access to the network to guest users.

According to one embodiment said authorization control list comprises a security policy defining whether and to which extent the device is allowed to communicate with locations outside the WHAN, and said method comprising:
if a request to establish a communication between said device and a location outside said WHAN reaches said communication management device from said device or from outside, checking whether said security policy allows such a communication and depending on the result of said check, allowing or refusing the establishment of said communication.

In this manner it is possible to define in detail the extend to which the communication of network devices with the outside is allowed.

According to one embodiment said communication management device comprises a public/private key pair for authenticating said device towards a service provider or towards said configuration device; and/or
said configuration device comprises a public/private key pair for authenticating said device towards a service provider or towards said communication management device; whereas said method comprises:
repairing or maintaining said communication management device online through said service provider after said communication management device after mutual authentication.

In this manner an online administration which may include repair services through the service provider can be established.

According to one embodiment said configuration device stores a copy of said access control list and acts as said communication management device if said communication management device is not available.

In this manner a failsafe procedure in case of the communication management device being unavailable or broken can be established. Moreover, it becomes possible to achieve the functionalities of easy network administration while maintaining security even without the communication management device.

According to one embodiment a set of keys has been installed in said communication management device and said configuration device by a service provider, whereas said method further comprises:
revoking said configuration device by said service provider by deleting the public key or symmetric key of said configuration device from said communication management device; and/or
revoking said communication management device by said service provider by not allowing it anymore to connect to the internet or a mobile phone network.

In this way the service provider maintains "ultimate" control over the WHAN network and may replace or "switch off' the communication management device and/or the configuration device.

According to one embodiment said communication management device comprises an access interface for accessing a mobile phone network and/or the internet and/or any network and a database comprising predefined one or more security policies which specify security levels and the protocols associated thereto as well as how to secure different types of communications if these security levels are activated.

In this manner the way how the internal and/external communication operates, which security policy should be applied under which circumstances, can be defined.

According to one embodiment there is provided a system for operating a wireless home access network (WHAN), said network comprising:
a communication management device for managing the communication within said WHAN by allowing or refusing communication between the devices belonging to said WHAN and/or between a device of said WHAN and the outside; a configuration device for configuring the devices belonging to said WHAN comprising a short range communication interface;
a plurality of network devices, whereas said communication management device further comprises a management database for storing management data related to the operation of said WHAN network, said management data comprising for each of said plurality of devices its device ID and its corresponding secret key, whereas said apparatus comprises:
   a module for distributing a secret key from said configuration device to one of said plurality of devices via said short range communication interface in order to add it to the WHAN;
   a module for sending a configuration message from said configuration device to said communication management device which contains configuration information about the device to which said secret key has been sent; and
   a module for entering said configuration information into said management database of said communication device.

According to one embodiment the system further comprises:
means for enabling said system to perform a method according to one of the embodiments of the invention.

According to one embodiment there is provided a communication management device comprising:
a management database for storing management data related to the operation of a wireless home area network, further referred to as WHAN , said management data comprising for each of a plurality of devices of said WHAN its device ID and its corresponding secret key,
a short range communication interface for receiving a configuration message from a configuration device to said communication management device which contains configuration information about the device of said WHAN to which a secret key has been sent to add said device of said WHAN to said WHAN,
said communication management device being adapted for managing the communication within said WHAN by allowing or refusing communication between the devices belonging to said WHAN and/or between a device of said WHAN and the outside.

According to one embodiment the communication management device further comprises:
a module for enabling said communication management device to perform a method according to one of the embodiments of the invention.

According to one embodiment there is provided a configuration device to be used in connection with a system according to an embodiment of the invention, said configuration device comprising:
a short range communication interface for distributing a secret key from said configuration device to one of a plurality of devices via said short range communication interface in order to add it to the WHAN;
a module for sending a configuration message from said configuration device to said communication management device which contains configuration information about the device to which said secret key has been sent

According to one embodiment the configuration device further comprises:
a module for enabling said configuration device to perform a method according to one of the embodiments of the invention.

According to one embodiment there is provided a computer program comprising computer program code which when being executed on a computer enables said computer to perform a method according to one of the embodiments of the invention.

### DESCRIPTION OF THE DRAWINGS

Fig. 1 schematically illustrates an environment in which an embodiment of the invention may be used.
Fig. 2 schematically illustrates an environment in which a further embodiment of the invention may be used.

### DETAILED DESCRIPTION

Before explaining embodiments of the invention some terms used in the following will be clarified.

WHAN: Wireless Home Area Network
ACL: Access Control List

In the following there will be described embodiments which permit easy and quick key distribution to wireless devices that must participate in a WHAN. According to some embodiments this also covers key management -that is secure key distribution, secure key storage, and secure key update-, the establishment of secure communication channel with other networks -needed if a user of the WHAN wants to access the Internet-, the establishment of secure communication channel from the outside -needed if a user of the WHAN wants to access the WHAN while it is out of the WHAN's coverage area.

In the following an embodiment of a WHAN will be described. An entity (Individual or company) can either register by going at a service counter or by contacting a service counter by phone or through the internet. During the registration, the entity is asked to indicate the individual that will be the WHAN administrator (the entity that registered can also be the WHAN administrator). Later, a communication box is sent to the individual that registered. The WHAN administrator receives a mobile phone, if he does not have any on preregistered at the network provider that offers the service, along with a Smartcard. If he already has a mobile phone registered at the network provider that offers the service, the administrator receives a new Smartcard if the current Smartcard can not take in charge the new service. Otherwise the administrators' mobile phone receives security parameters that must be securely stored in the SmartCard.

In the following the elements taking part in setting up a WHAN according to an embodiment of the invention will be described in somewhat more detail.
A first one of these elements is the so-called communication management device or - as it is referred to hereafter - communication box which is a device with wireless communication and key management capabilities. It also has a database with one or more predefined security policies. These one or more policies specify, among others, the following:
- Security levels
- The protocols associated to these security levels
- The services to provide if these security levels are activated
- How different types of communications are secured when these security levels are activated -communications that take place inside the WHAN may require different security protocols to be used than the services that are provided when a device that is out of the WHAN wants to communicate with a device in the WHAN

The box has another database with the configuration parameters specified by the WHAN administrator.

The communication box has a SmartCard , e.g a SIM with:
- Its public/private key pair: the box's public key is also stored at the network provider
- The public key of the WHAN administrator: this public key will be used to authenticate the device that is authorized to configure the box (or communication box)
- The network provider's public key: this is used to authenticate management messages sent by the network provider

The box is assumed to have an access to a 3G network and/or to the internet.

Now another element of the WHAN, a configuration device which according to one embodiment is formed by the administrators mobile phone will be described.

The administrator's mobile phone according to one embodiment has an application that permits it to access configuration functions. These functions permit to:
- Specify the devices that are part of the WHAN by distributing them their long term secret keys
- Specify the security levels that the box must assign to them
- Specify the access control list

The mobile phone has the same database as the box's one with the configuration parameters specified by the WHAN administrator.

The mobile phone is equipped with a wireless LAN interface card and also with a Near Field Communication (NFC) (see e.g. http://www.sony.co.jp/Products/felica/) or infrared IrDA interface, or any other device which is able to facilitate communication within a short range of a few meters or even less.

The mobile phone has a SIM with:
- Its public/private key pair
- The box's public key: this public key is used to authenticate the box
- The network provider's public key: this is used to authenticate management messages

In the following initial key distribution according to one embodiment will be described.

Initial key distribution permits to distribute a secret key to authorized devices. After this step, only devices that are able to prove the knowledge of a valid key can take part in the WHAN.
If initial key distribution is not well done, an attacker may be able to listen to communications that take place in the WHAN. Therefore, initial key distribution is critical.

Initial Key distribution is made by the WHAN administrator with his mobile phone. For that, he must activate the right menu on his mobile phone and he must position his mobile phone next to the device *device*₁ to which an initial key must be distributed through NFC or IrDA. NFC is extremely short range thus attacks during the communication is not easy. Any other communication interface which has only a short range (such as a few meters or even less than one meter) may be used for this purpose which makes eavesdropping or any other attacks extremely difficult.

Once the mobile phone has sent a secret key to *device*₁, it authenticates itself to the box with its private key and authenticates the box with the box's public key. Then the box and the mobile phone establish a secure communication channel. Different existing solution can be used for mutual authentication and for the establishment of the secure communication channel such as the TLS Protocol Version 1.0 (RFC2246).. The secret key established during this phase could be used later for mutual authentication and/or for the establishment of secure communication channels between the box and the mobile phone. Solutions such as one-way hash chains can be used to update that secret key. Devices must be able to store securely the secret key received from or establish with the administrator's mobile phone.

Then the mobile phone sends a configuration message to the communication box through the secure communication channel. When it receives it, the box adds an entry to its database as follows:
Table 1 Database managed by the communication box

| DeviceID | Long term Secret key | ACL | Security level | Session key | Status | Expiration date |
|---|---|---|---|---|---|---|
| device₁ | S₁ | *device*2, | device₁_level | Session_key1 | Permanent | |
| | | *device4* | | | | |
| | | *device9* | | | | |
| ... | ... | ... | ... | ... | ... | ... |
| ... | ... | ... | ... | ... | ... | ... |
| ... | ... | ... | ... | ... | ... | ... |

The fields composing Table 1 are as follows:
- **DeviceID** corresponds to the device identifier here it is *device*₁.
- **Long term secret key** corresponds to the secret key that the mobile phone sent to or has established with the newly added device
- **The Access Control List (ACL)** is the list of devices with which *device*₁ can communicate
- **The security level** permits to identify the security services that will be provided to *device1* as well as the security protocols that will be used to secure its communications. This may also include indications regarding whether the device is allowed to communicate with the outside and to which extent. E.g. there may be stored devices or locations (such as domains) outside the WHAN with which a communication is allowed and all others are forbidden. Therefore the information stored in this column may also be part of the "security policy".
- **Session key** corresponds to the current session key used by a device
- **The Status** indicates whether the added device is invited in the WHAN or whether it is a permanent member of WHAN. This will be explained later.
- **Expiration date** indicates until when a device is authorized to take part to the network

The previous process is repeated each time that a device has to be added in the WHAN.

The mobile phone may also add a group of devices in the following way:
- Distribution of the secret keys to the devices to add to the WHAN
- Emission of a configuration message to the box that contains configuration information for all devices to which a key has been sent

In one embodiment each device is assigned a different secret key to permit the establishment of secure "one-to-one" communication channels.

When the configuration parameters are sent to the box the mobile phone stores a copy of these parameters in its database.

The access to the mobile phone's configuration functions require the entry of a strong pass-phrase initially specified by the WHAN administrator. This reduces the risk that an attacker that has taken the control of the administrator's device is able to change the configuration of the network.

In the following the Key management according to one embodiment will be described.

When two devices *device*₁ and device₂ want to establish a secure communication channel, they send a request to the box. The box controls that devices that requested the establishment of a secret key are authorized to communicate. For this it verifies that devices appear in their respective ACLs. If it is the case, then the box chooses a secret key session_key1 -cf Table 1- that it sends to device₁ encrypted with *device*₁'s long term secret key -S₁ in Table 1 - and that it sends to device₂ encrypted with device₂'s long term secret key. Solutions such as Kerberos (see e.g. J. Kohl, C. Neuman. The Kerberos Network Authentication Service (V5), RFC 1510, September 1993) can be used to manage key establishment. When a device must leave the WHAN the administrator's mobile phone informs the box that can update the keys previously used by the device that left the network. The box also removes from its database the entry corresponding to the device that left the WHAN. Key update is also made by the box when new ACL are defined, when a device must be excluded from the network, etc. This avoids that the device which has left can still listen to the traffic because the keys are not updated.

Now the Authorization management according to one embodiment will be described.
After the WHAN administrator has assigned a secret key to *device*₁ *,* he also specifies the list of devices with which *device*₁ is allowed to communicate. This must be done easily by activating the adapted menu on his mobile phone. Once this is done, the mobile phone sends the list to the communication box that adds it in its database as an access control list (ACL) - see Table 1.

The user can also assign a status to the devices that are added to the network. Two statuses may be sufficient that can be: *permanent* and *invited*. The *permanent* status is used for devices that are permanent members of the WHAN while the *invited* status permits to add temporary a device. When the *invited* status is chosen the user can also specify an expiration date after which the invited device is not authorized to take part to the network. After the expiration date is passed, an *invited* device must not access anymore to the network. It may be suitable to define a status and expiration date by default. Once a validity period is over, the communication box removes the corresponding entry and updates the keys that the invited device used to communicate with other devices in the network.

Instead of using a status field in the ACL to distinguish between permanent and invited devices it is also possible to just use the expiration date field for that purpose. E.g. for permanent devices an expiration date far ahead (e.g. January 1, year 2199) may be chosen which indicates the device to be "permanent". A more closer expiration date may indicate an "invited device".

Now the Connection to other networks according to one embodiment will be described.
Devices in the WHAN, except the administrator's mobile phone, will have to contact the communication box to communicate with the outside. When the communication box will receive a request, it will verify whether the device is allowed to access to the outside by verifying that the security level assigned to the device allows it. If it is the case then, the communication box uses the security policy to identify the services and the protocols that must be used to secure the communication that will be established with the outside. If the security level assigned to the device does not allows a communication with the outside, then a notification may be sent to the device to make it aware that no connection with the inside is possible.

Now the establishment of a Connection from other networks to the WHAN according to one embodiment will be described.

A device that wants to access to the WHAN from the outside will have to authenticate itself to the communication box using a protocol that will be specified by the communication box based on its security policy. Then, regarding the security level associated to the authenticated devices the communication box will identify the devices in the WHAN that can be accessed from the outside. The communication box will distribute a same secret key to the device in the WHAN and to the device out of the WHAN. It will also specify to them which protocol they must use and which services must be provided.

In the following some aspects of the Security management according to the embodiments of the invention will be explained.

The solution described in the foregoing is easy to manage since the service provider may send authenticated management messages to the box in order to solve technical problems online. Before exploiting any management message the box needs to verify its authenticity with the network provider's public key. In case where the box does not work and can not be repaired online, the service provider may send some technicians to the WHAN owner's home or company. According to one embodiment the WHAN will still be secured by the administrator's mobile phone that will act as communication box during the time when the communication box needs to be repaired.

The user that subscribed to the service may also need to add devices that may act as communication box when the box or the administrator's mobile phone is not available. This may be done by assigning the right security level to a mobile phone that has a subscription with the network operator that provides the service. Then, the box may also send to that device the configuration parameters specified by the WHAN administrator and send it update messages to update these parameters whenever they are changed.

When the administrator's mobile phone public key has been revoked by the administrator at the network provider, the network provider sends a new administrator's public key to the box that removes the previous administrator's public key and replaces it by the newly received one. Moreover, all the keys that the administrator's mobile phone shared with devices in the network are updated. If it is the communication box's public key that needs to be revoked, then the network provider does not authorize the box anymore to connect to the 3G network or/and to the internet. The administrator's mobile phone receives an authenticated message from the network provider in order it to act as communication box. The keys used by devices in the network are updated. Later, a new box or a new box's Smartcard is sent to the WHAN administrator.

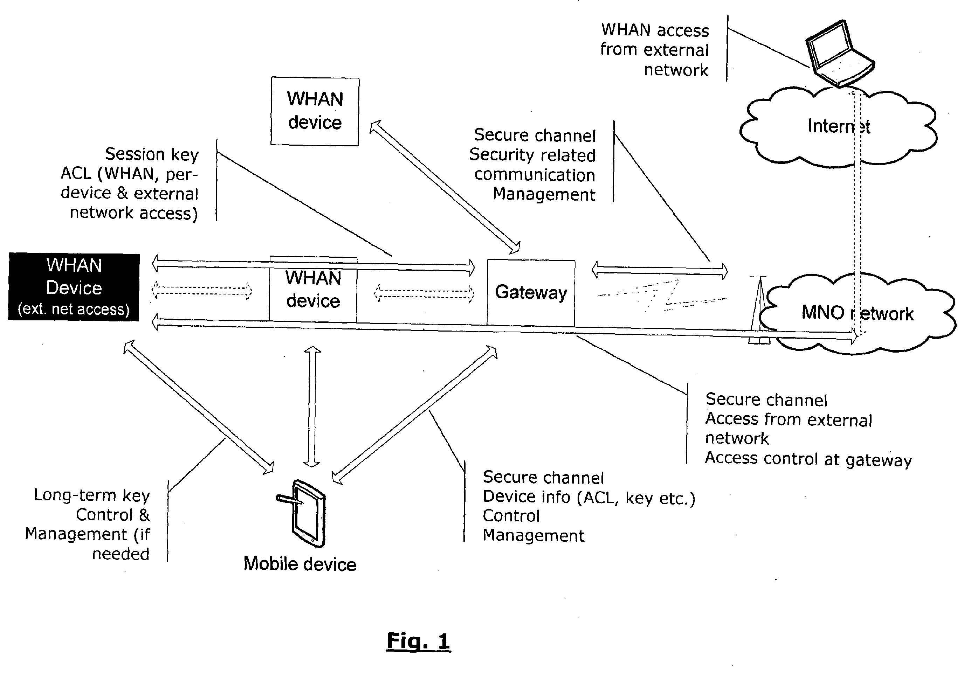

Fig. 1 schematically illustrates an environment in which an embodiment of the invention may be used. The communication management device is shown here as "gateway" through which the devices of the network (WHAN devices) may communicate with each other or access the world outside the network, e.g. as shown through the mobile network operator's'network (MNO network) through which the devices may access mobile phones or the internet.

The configuration device in Fig. 1 is shown as mobile device through which the gateway receives secure channel device information such as the secret keys assigned to the individual devices by the mobile device and possible other information to be stored in the management table such as whether a device is a permanent device or invited, its expiration time, the other device to which it may connect and other entries to be stored in the ACL.

The key distribution of the long term keys and possibly access control management information is done by the configuration device (the mobile device) to the WHAN devices through a short range interface which prevents an attack through eavesdropping.

Communication between the WHAN devices is established through the gateway which distributes a session key to the devices.

Through a secure channel between the gateway and the MNO network (which may be secured by mutual authentication as described before) the communication to the outside may be managed (and limited according to the defined one or more security policies), moreover the MNO network may access through this channel the gateway for maintenance and repair operations.

Furthermore, through this channel access from the outside to the WHAN network may be controlled, administrated and also limited if defined in one or more security policies.

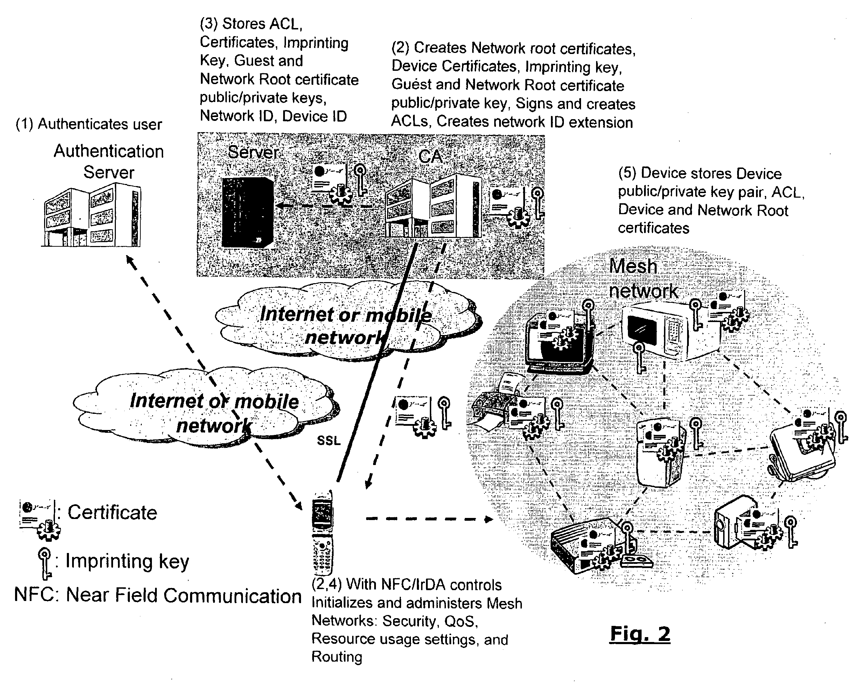

An operation of a further embodiment according to the invention will now be explained in connection with Fig. 2. A configuration device (the mobile phone) at first authenticates itself towards an authentication server. This is done based on the preregistered private key of the mobile phone stored in its Smartcard. Once authentication was successful it may access the domain of the network operator and its server shown in the upper part of Fig. 2 which is connected to some certification authority which can generate keys and certificates.

The certification authority (on request from the mobile phone) generates certificates (which may be based on a root certificate for the network) for devices which are to be added to the WHAN network and forwards them to the mobile phone. The mobile phone uses them together with corresponding keys to initialize a device newly to be added to thereby administrate the WHAN which is a mesh network. This is illustrated in Fig. 2 by the certificates and imprinting keys (the secret key of a device) which are distributed to the mobile phone to these devices via some short range communication interface. During this step further configuration regarding the administration of the network such as one or more security policies, QoS information, resource usage settings, and routing information may be forwarded to these devices. In Fig. 2 exemplarily a set of devices such as a printer, a TV set, a microwave, a refrigerator, a HiFi and a videocamera are shown which may be configured as network devices in this manner.

The server (which belongs to the network operator) may store all this information like the access control list ACL, certificates, Imprinting Key; guest and network root certificate (the root certificate is the CA certificate for verifying the authenticity of a certificate) the public/private keys of the individual devices, the network ID and the device ID for each network device. In this manner the whole information about the WHAN is stored at the server of the mobile network operator to keep an image of the relevant information of the WHAN and possibly also of the mobile phone.

As can be seen in Fig. 2, each network device has ist imprinted key and ist certificate by which it is able to securely communicate with other devices of the network.

In this embodiment there is shown no separate communication management device, its function in this embodiment is taken over by the mobile phone itself which stores the ACL and the other relevant information to maintain and control the operation of the WHAN.

It will be understood by the skilled person that the embodiments described hereinbefore may be implemented by hardware, by software, or by a combination of software and hardware. The modules and functions described in connection with embodiments of the invention may be as a whole or in part implemented by microprocessors or computers which are suitably programmed such as to act in accordance with the methods explained in connection with embodiments of the invention. An apparatus implementing an embodiment of the invention may e.g. comprise a communication management device or a configuration device which is suitably programmed such that it is able to carry out a network management method as described in the embodiments of the invention.

According to an embodiment of the invention there is provided a computer program, either stored in a data carrier or in some other way embodied by some physical means such as a recording medium or a transmission link which when being executed on a computer enables the computer to operate in accordance with the embodiments of the invention described before.

## Claims

1. A method for operating a wireless home area network, further referred to as (WHAN), said network comprising:
a communication management device for managing the communication within said WHAN by allowing or refusing communication between the devices belonging to said WHAN and/or between a device of said WHAN and the outside;
a configuration device for configuring the devices belonging to said WHAN comprising a short range communication interface;
a plurality of network devices, whereas said communication management device further comprises a management database for storing management data related to the operation of said WHAN network, said management data comprising for each of said plurality of devices its device ID and its corresponding secret key, whereas said method comprises:
distributing a secret key from said configuration device to one of said plurality of devices via said short range communication interface in order to add it to the WHAN;
sending a configuration message from said configuration device to said communication management device which contains configuration information about the device to which said secret key has been sent; and
entering said configuration information into said management database of said communication management device.

2. The method of claim 1, wherein
said communication management device and said configuration device are able to securely communicate with each other by a set of keys comprising one or more keys, and/or
said configuration device being a mobile phone with said one or more keys enabling it to communicate with said communication management device being stored on a Smartcard.

3. The method of claim 1 or 2, further comprising:
if one of said plurality of devices wants to communicate with another one of said plurality of devices, sending a request to said communication management device;
choosing a session key for said two devices by said communication management device;
encrypting the session keys by using the secret keys of said devices and forwarding the session key to said devices to enable them to communicate using said session key.

4. The method of one of the preceding claims, wherein
said management database comprises an authorization control list which specifies for each of said plurality of devices with which others of said plurality of devices it is allowed to communicate, and said method further comprising:
verifying by said communication management device by checking said authorization control list whether the two devices are allowed to communicate with each other.

5. The method of one of the preceding claims, wherein
said authorization control list comprises an entry corresponding to a status of said device to distinguish between a permanent device and an invited device which is allowed to participate in said wireless home area network only until a certain expiration date.

6. The method of one of the preceding claims, wherein
said authorization control list comprises a security policy defining whether and to which extent the device is allowed to communicate with locations outside the WHAN, and said method comprising:
if a request to establish a communication between said device and a location outside said wireless home area network reaches said communication management device from said device or from outside, checking whether said security policy allows such a communication and depending on the result of said check, allowing or refusing the establishment of said communication

7. The method of one of the preceding claims, wherein
said communication management device comprises a public/private key pair for authenticating said device towards a service provider, or towards said configuration device; and/or
said configuration device comprises a public/private key pair for authenticating said device towards a service provider or towards said communication management device; whereas said method comprises:
repairing or maintaining said communication management device online through said service provider after said communication management device after mutual authentication.

8. The method of one of the preceding claims, wherein
said configuration device stores a copy of said Authorization control list and of said management table and acts as said communication management device if said communication management device is not available.

9. The method of one of the preceding claims, wherein
a preregistered set of keys has been installed in said communication management device and said configuration device by a service provider, whereas said method further comprises:
revoking the public key or symmetric key of said configuration device by said service provider by deleting the public key of said configuration device from said communication management device; replacing it with a new public key or symmetric key received from said service provider; updating one or more secret keys in the management database from the communication management device and/or
revoking the public key or symmetric key of said communication management device by said service provider by not allowing it anymore to connect to the internet or a mobile phone network; deleting the public key or symmetric key of said communication management device from said configuration device and replacing it with a new public key received from said service provider, updating one or more secret keys in the management database from the configuration device.

10. The method of one of the preceding claims, wherein
said communication management device comprises an access interface for accessing a mobile phone network and/or the internet and/or any network and a database comprising a predefined security policy which specify security levels and the protocols associated thereto as well as how to secure different types of communications if these security levels are activated.

11. A system for operating a wireless home access network, further referred to as WHAN, said network comprising:
a communication management device for managing the communication within said WHAN by allowing or refusing communication between the devices belonging to said WHAN and/or between a device of said WHAN and the outside;
a configuration device for configuring the devices belonging to said WHAN comprising a short range communication interface;
a plurality of network devices, whereas said communication management device further comprises a management database for storing management data related to the operation of said WHAN network, said management data comprising for each of said plurality of devices its device ID and its corresponding secret key, whereas said apparatus comprises:
a module for distributing a secret key from said configuration device to one of said plurality of devices via said short range communication interface in order to add it to the WHAN;
a module for sending a configuration message from said configuration device to said communication management device which contains configuration information about the device to which said secret key has been sent; and
a module for entering said configuration information into said management database of said communication device.

12. The system of claim 11, further comprising:
means for enabling said system to perform a method according to one of claims 2 to 10.

13. A communication management device comprising:
a management database for storing management data related to the operation of a wireless home area network, further referred to as WHAN, said management data comprising for each of a plurality of devices of said WHAN its device ID and its corresponding secret key,
a short range communication interface for receiving a configuration message from a configuration device to said communication management device which contains configuration information about the device of said WHAN to which a secret key has been sent to add said device of said WHAN to said WHAN,
said communication management device being adapted for managing the communication within said WHAN by allowing or refusing communication between the devices belonging to said WHAN and/or between a device of said WHAN and the outside.

14. The communication management device of claim 13, further comprising:
a module for enabling said communication management device to perform a method according to one of claims 2 to 10.

15. A computer program comprising computer program code which when being executed on a computer enables said computer to perform a method according to one of claims 2 to 10.

## Patentansprüche

1. Ein Verfahren zum Betreiben eines drahtlosen Heimbereich-Netzwerks, ferner bezeichnet als (WHAN), wobei das Netzwerk aufweist:
eine Kommunikations-Management-Vorrichtung zum Managen der Kommunikation innerhalb des WHAN durch Gestatten oder Verweigern von Kommunikation zwischen den Geräten, die zu dem WHAN gehören und/oder zwischen einem Gerät des WHAN und dem Äußeren;
eine Konfigurationsvorrichtung zum Konfigurieren der Vorrichtungen, die zu dem WHAN gehören, aufweisend ein Nahbereichs-Kommunikationsinterface;
eine Mehrzahl von Netzwerkvorrichtungen, wobei die Kommunikations-Management-Vorrichtung ferner aufweist: eine Management-Datenbank zum Speichern von Managementdaten, die auf den Betrieb des WHAN-Netzwerkes bezogen sind, wobei die Managementdaten für jede der Mehrzahl von Vorrichtungen deren Geräte-ID und ihren entsprechenden geheimen Schlüssel speichert, wobei das Verfahren aufweist:
Verteilen eines geheimen Schlüssels von der Konfigurationsvorrichtung zu einer der Mehrzahl von Vorrichtungen über das Nahbereichs-Kommunikationsinterface, um es zu dem WHAN hinzuzufügen;
Senden einer Konfigurationsnachricht von der Konfigurationsvorrichtung zu der Kommunikations-Management-Vorrichtung, welche Konfigurationsinformationen über die Vorrichtung enthält, zu der der geheime Schlüssel gesandt wurde; und
Hinzufügen der Konfigurationsinformationen in die Management-Datenbank der Kommunikations-Management-Vorrichtung.

2. Verfahren nach Anspruch 1, wobei
die Kommunikations-Management-Vorrichtung und die Konfigurations-Vorrichtung in der Lage sind, sicher miteinander mittels eines Satzes von Schlüsseln, der einen oder mehrere Schlüssel aufweist, zu kommunizieren, und/oder
die Konfigurationsvorrichtung ein Mobiltelephon mit einem oder mehreren Schlüsseln ist, die auf einer Smartcard gespeichert sind und es in die Lage versetzen, mit der Kommunikations-Management-Vorrichtung zu kommunizieren.

3. Verfahren nach Anspruch 1 oder 2, ferner aufweisend:
falls eine der Mehrzahl von Vorrichtungen mit einer anderen der Mehrzahl von Vorrichtungen kommunizieren möchte, senden einer Anforderung zu der Kommunikations-Management-Vorrichtung;
wählen eines Session-Schlüssels für die zwei Vorrichtungen durch die Kommunikations-Management-Vorrichtung;
verschlüsseln der Session-Schlüssel unter Verwendung des geheimen Schlüssels der Vorrichtungen und Weiterleiten des Session-Schlüssels zu den Vorrichtungen, um sie in die Lage zu versetzen, unter Verwendung des Session-Schlüssels zu kommunzieren.

4. Verfahren nach einem der vorhergehenden Ansprüche, wobei
die Management-Datenbank eine Autorisierungs-Steuerliste aufweist, die für jede der Mehrzahl von Vorrichtungen spezifiziert, mit welcher anderen der Mehrzahl von Vorrichtungen es ihr gestattet ist, zu kommunizieren und wobei das Verfahren ferner aufweist:
Verifizieren durch die Kommunikations-Management-Vorrichtung durch Überprüfen der Autorisierungs-Steuerliste, ob den zwei Vorrichtungen gestattet ist, miteinander zu kommunizieren.

5. Verfahren nach einem der vorhergehenden Ansprüche, wobei
die Autorisierungs-Steuerliste einen Eintrag aufweist, der einem Status der Vorrichtung entspricht, um zwischen einer permanenten Vorrichtung und einer eingeladenen Vorrichtung zu unterscheiden, der es gestattet ist, in dem drahtlosen Heimbereichs-Netzwerk nur bis zu einem bestimmten Ablaufdatum teilzunehmen.

6. Verfahren nach einem der vorhergehenden Ansprüche, wobei
die Autorisierungs-Steuerliste eine Sicherheits-Policy aufweist, die definiert, ob und in welchem Ausmaß der Vorrichtung gestattet ist, mit Orten außerhalb des WHAN zu kommunizieren und wobei das Verfahren aufweist:
falls eine Anforderung zum Etablieren einer Kommunikation zwischen der Vorrichtung und einem Ort außerhalb des drahtlosen Heimbereichs-Netzwerks die Kommunikations-Management-Vorrichtung von der Vorrichtung oder von außerhalb erreicht, überprüfen, ob diese Sicherheits-Policy eine solche Kommunikation gestattet und, abhängig von dem Ergebnis der Überprüfung, gestatten oder verweigern des Etablierens der Kommunikation.

7. Verfahren nach einem der vorhergehenden Ansprüche, wobei
die Kommunikations-Management-Vorrichtung ein öffentlich/privates Schlüsselpaar zum Autentifizieren der Vorrichtung gegenüber einem Serviceprovider oder gegenüber der Konfigurationsvorrichtung aufweist und/oder
die Konfigurationsvorrichtung ein öffentliches/privates Schlüsselpaar zum Autentifizieren der Vorrichtung gegenüber einem Serviceprovider oder gegenüber der Kommunikations-Management-Vorrichtung aufweist; wobei das Verfahren aufweist:
Reparieren oder Warten der Kommunikations-Management-Vorrichtung online durch den Serviceprovider nach der Kommunikations-Management-Vorrichtung nach gegenseitiger Autentifizierung.

8. Verfahren nach einem der vorhergehenden Ansprüche, wobei
die Konfigurationsvorrichtung eine Kopie der Autorisierungs-Steuerliste und der Managementtabelle speichert und als die Kommunikations-Management-Vorrichtung agiert, wenn die Kommunikations-Management-Vorrichtung nicht verfügbar ist.

9. Verfahren nach einem der vorhergehenden Ansprüche, wobei
ein vorregistrierter Satz von Schlüsseln in der Kommunikations-Management-Vorrichtung und der Konfigurations-Vorrichtung durch einen Serviceprovider installiert wurde, wobei das Verfahren ferner aufweist:
Widerrufen des öffentlichen Schlüssels oder symmetrischen Schlüssels der Konfigurationsvorrichtung durch den Serviceprovider durch Löschen des öffentlichen Schlüssels der Konfigurationsvorrichtung von der Kommunikations-Management-Vorrichtung, Ersetzen von ihm mit einem neuen öffentlichen Schlüssel oder symmetrischen Schlüssel, der von dem Serviceprovider empfangen wurde; Updaten von einem oder mehreren geheimen Schlüsseln in der Management-Datenbank von der Kommunikations-Management-Vorrichtung und/oder
Widerrufen des öffentlichen Schlüssels oder symmetrischen Schlüssels der Kommunikations-Management-Vorrichtung durch den Serviceprovider, **dadurch, dass** ihr nicht gestattet wird, sich noch einmal mit dem Internet oder einem mobilen Telefonnetz zu verbinden; Löschen des öffentlichen Schlüssels oder symmetrischen Schlüssels der Kommunikations-Management-Vorrichtung von der Konfigurationsvorrichtung und Ersetzen von ihm mit einem neuen öffentlichen Schlüssel, der von dem Serviceprovider empfangen wurde, Updaten von einem oder mehreren geheimen Schlüsseln in der Management-Datenbank von der Konfigurationsvorrichtung.

10. Verfahren nach einem der vorhergehenden Ansprüche, wobei
die Kommunikations-Management-Vorrichtung ein Zugriffsintertace umfasst zum Zugreifen auf ein mobiles Telephonnetz und/oder das Internet und/oder irgendein Netzwerk und eine Datenbank aufweisend eine vordefinierte Sicherheits-Policy, welche Sicherheitsniveaus spezifiziert und die damit assoziierten Protokolle sowie auf welche Weise unterschiedliche Typen von Kommunikation gesichert werden, falls diese Sicherheitsniveaus aktiviert sind.

11. System zum Betreiben eines drahtlosen Heimbereichs-Netzwerks, weiter bezeichnet als (WHAN), wobei das Netzwerk aufweist:
Eine Kommunikations-Management-Vorrichtung zum Managen der Kommunikation innerhalb des WHAN durch Gestatten oder Verweigern von Kommunikation zwischen den Vorrichtungen, die zu dem WHAN gehören und/oder zwischen einer Vorrichtung des WHAN und dem Äußeren;
eine Konfigurationsvorrichtung zum Konfigurieren der Vorrichtung, die zu dem WHAN gehören, aufweisend ein Nahbereichs-Kommunikationsintertace;
eine Mehrzahl von Netzwerk-Vorrichtungen, wobei die Kommunikations-Management-Vorrichtung ferner aufweist: eine Management-Datenbank zum Speichern von Managementdaten, die auf den Betrieb des WHAN-Netzwerks bezogen sind, wobei die Managementdaten aufweisen: für jede der Mehrzahl von Vorrichtungen ihre Vorrichtungs-ID und ihren entsprechenden geheimen Schlüssel, wobei die Vorrichtung aufweist:
ein Modul zum Verteilen eines geheimen Schlüssels von der Konfigurations-vorrichtung zu einem der Mehrzahl von Vorrichtungen über das Nahbereichs-Kommunikationsinterface, um es zum WHAN hinzuzufügen;
ein Modul zum Senden einer Konfigurationsnachricht von der Konfigurations zu der Kommunikations-Management-Vorrichtung, welche Konfigurationsinformationen über die Vorrichtung, zu der Kommunikations-Management-Vorrichtung, welche Konfigurationsinformationen über die Vorrichtung, zu der der geheime Schlüssel gesandt enthält, und
ein Modul zum Hinzufügen der Konfigurationsinformationen in die Management-Datenbank der Kommunikationsvorrichtung.

12. System nach Anspruch 11 ferner aufweisend:
eine Einrichtung um das System in die Lage zu versetzen, ein Verfahren gemäß einem der Ansprüche 2 bis 10 auszuführen.

13. Eine Kommunikations-Management-Vorrichtung aufweisend:
eine Management-Datenbank zum Speichern von Managementdaten, die auf den Betrieb eine drahtlosen Heimbereichs-Netzwerks bezogen sind, weiter bezeichnet als WHAN, wobei die Managementdaten für jede einer Mehrzahl von Vorrichtungen des WHAN ihre Vorrichtungs-ID und ihren entsprechenden geheimen Schlüssel aufweisen,
ein Nahbereichs-Kommunikationsinterface zum Empfangen einer Konfigurationsnachricht von einer Konfigurationsvorrichtung zu der Kommunikations-Management-Vorrichtung, welche Konfigurationsinformationen über die Vorrichtung des WHAN, zu der ein geheimer Schlüssel gesandt wurde, enthält, um die Vorrichtung des WHAN zu dem WHAN hinzuzufügen, wobei die Kommunikations-Management-Vorrichtung angepasst ist, die Kommunikation innerhalb des WHAN zu managen, und zwar durch Gestatten oder Verweigern von Kommunikation zwischen den Vorrichtungen, die zu dem WHAN gehören und/oder zwischen einer Vorrichtung des WHAN und dem Äußeren.

14. Kommunikations-Management-Vorrichtung nach Anspruch 13, ferner aufweisend:
ein Modul, um die Kommunikations-Management-Vorrichtung in die Lage zu versetzen, ein Verfahren gemäß einer der Ansprüche 2 bis 10 auszuführen.

15. Ein Computerprogramm aufweisend Computerprogrammcode, der wenn er auf einem Computer ausgeführt ist, den Computer in die Lage versetzt, ein Verfahren gemäß einem der Ansprüche 2 bis 10 auszuführen.

## Revendications

1. Procédé de fonctionnement d'un réseau local sans fil, auquel il est en outre fait référence ci-après en tant que WHAN, ledit procédé comprenant :
un dispositif de gestion de communication pour gérer la communication à l'intérieur dudit WHAN en permettant ou en refusant une communication entre les dispositifs appartenant audit KHAN et/ou entre un dispositif dudit WHAN et l'extérieur ;
un dispositif de configuration pour configurer les dispositifs appartenant audit WHAN comprenant une interface de communication de courte portée ;
une pluralité de dispositifs de réseau, dans lequel ledit dispositif de gestion de communication comprend en outre une base de données de gestion pour stocker des données de gestion relatives au fonctionnement dudit réseau WHAN, lesdites données de gestion comprenant pour chacun de ladite pluralité de dispositifs son identifiant de dispositif et sa clé secrète correspondante, dans lequel ledit procédé comprend les étapes consistant à :
distribuer une clé secrète dudit dispositif de configuration à l'un de ladite pluralité de dispositifs par l'intermédiaire de ladite interface de communication de courte portée pour l'ajouter au KHAN ;
envoyer un message de configuration dudit dispositif de configuration audit dispositif de gestion de communication qui contient des informations de configuration relatives au dispositif auquel ladite clé secrète a été envoyée ; et
entrer lesdites informations de configuration dans ladite base de données de gestion dudit dispositif de gestion de communication.

2. Procédé selon la revendication 1, dans lequel
ledit dispositif de gestion de communication et ledit dispositif de configuration sont aptes à communiquer en toute sécurité l'un avec l'autre par un ensemble de clés comprenant une ou plusieurs clés, et/ou
ledit dispositif de configuration est un téléphone mobile muni desdites une ou plusieurs clés lui permettant de communiquer avec ledit dispositif de gestion de communication qui sont stockées sur une carte à puce.

3. Procédé selon la revendication 1 ou 2, comprenant en outre les étapes consistant à :
si l'un de ladite pluralité de dispositifs veut communiquer avec un autre de ladite pluralité de dispositifs, envoyer une demande audit dispositif de gestion de communication ;
choisir une clé de session pour lesdits deux dispositifs par ledit dispositif de gestion de communication ;
encrypter les clés de session en utilisant les clés secrètes desdits dispositifs et transférer la clé de session auxdits dispositifs pour leur permettre de communiquer en utilisant ladite clé de session.

4. Procédé selon l'une des revendications précédentes, dans lequel
ladite base de données de gestion comprend une liste de commande d'autorisation qui spécifie pour chacun de ladite pluralité de dispositifs avec quels autres dispositifs de ladite pluralité de dispositifs il est autorisé à communiquer, et ledit procédé comprend en outre l'étape consistant à :
vérifier par ledit dispositif de gestion de communication, en contrôlant ladite liste de commande d'autorisation, si les deux dispositifs sont autorisés à communiquer l'un avec l'autre.

5. Procédé selon l'une des revendications précédentes, dans lequel
ladite liste de commande d'autorisation comprend une entrée correspondant à un statut dudit dispositif pour distinguer entre un dispositif permanent et un dispositif invité qui est autorisé à participer audit réseau local sans fil uniquement jusqu'à une certaine date d'expiration.

6. Procédé selon l'une des revendications précédentes, dans lequel
ladite liste de commande d'autorisation comprend une politique de sécurité définissant si et dans quelle mesure le dispositif est autorisé à communiquer avec des zones à l'extérieur du WHAN, et ledit procédé comprenant les étapes consistant à :
si une demande pour établir une communication entre ledit dispositif et une zone à l'extérieur dudit réseau local sans fil atteint ledit dispositif de gestion de communication en provenance dudit dispositif ou de l'extérieur, contrôleur si ladite politique de sécurité permet une telle communication et en fonction du résultat dudit contrôle, permettre ou refuser l'établissement de ladite communication.

7. Procédé selon l'une des revendications précédentes, dans lequel
ledit dispositif de gestion de communication comprend une paire de clés publique/privée pour authentifier ledit dispositif auprès d'un prestataire de services ou auprès du dispositif de configuration ; et/ou
ledit dispositif de configuration comprend une paire de clés publique/privée pour authentifier ledit dispositif auprès d'un prestataire de services ou auprès dudit dispositif de gestion de communication ; dans lequel ledit procédé comprend l'étape consistant à :
réparer ou maintenir ledit dispositif de gestion de communication en ligne par le biais dudit prestataire de services après ledit dispositif de gestion de communication après l'authentification mutuelle.

8. Procédé selon l'une des revendications précédentes, dans lequel
ledit dispositif de configuration stocke une copie de ladite liste de commande d'autorisation et de ladite table de gestion et agit en tant que ledit dispositif de gestion de communication si ledit dispositif de gestion de communication n'est pas disponible.

9. Procédé selon l'une des revendications précédentes, dans lequel
un ensemble préenregistré de clés a été installé dans ledit dispositif de gestion de communication et ledit dispositif de configuration par un prestataire de services, dans lequel ledit procédé comprend en outre les étapes consistant à :
révoquer la clé publique ou la clé symétrique dudit dispositif de configuration par ledit prestataire de services en supprimant la clé publique dudit dispositif de configuration dudit dispositif de gestion de communication ; la remplacer par une nouvelle clés publique ou une nouvelle clé symétrique reçue dudit prestataire de services ; mettre à jour une ou plusieurs clés secrètes dans la base de données de gestion du dispositif de gestion de communication et/ou
révoquer la clé publique ou la clé symétrique dudit dispositif de gestion de communication par ledit prestataire de services en ne lui permettant plus de se connecter à Internet ou à un réseau de téléphonie mobile ; supprimer la clé publique ou la clé symétrique dudit dispositif de gestion de communication dudit dispositif de configuration et la remplacer par une nouvelle clé publique reçue dudit prestataire de services ; mettre à jour une ou plusieurs clés secrètes dans la base de données de gestion du dispositif de configuration.

10. Procédé selon l'une des revendications précédentes, dans lequel
ledit dispositif de gestion de communication comprend une interface d'accès pour accéder à un réseau de téléphonie mobile et/ou Internet et/ou tout réseau et une base de données comprenant une politique de sécurité prédéfinie spécifiant des niveaux de sécurité et les protocoles qui leur sont associés ainsi que la manière de sécuriser différents types de communications si ces niveaux de sécurité sont activés.

11. Système de fonctionnement d'un réseau local sans fil, auquel il est en outre fait référence ci-après en tant que WHAN, ledit réseau comprenant ;
un dispositif de gestion de communication pour gérer la communication à l'intérieur dudit WHAN en permettant ou en refusant une communication entre les dispositifs appartenant audit WHAN et/ou entre un dispositif dudit WHAN et l'extérieur ;
un dispositif de configuration pour configurer les dispositifs appartenant audit WHAN comprenant une interface de communication de courte portée ;
une pluralité de dispositifs de réseau, dans lequel ledit dispositif de gestion de communication comprend en outre une base de données de gestion pour stocker des données de gestion relatives au fonctionnement dudit réseau WHAN, lesdites données de gestion comprenant pour chacun de ladite pluralité de dispositifs son identifiant de dispositif et sa clé secrète correspondante, dans lequel ledit appareil comprend ;
un module pour distribuer une clé secrète dudit dispositif de configuration à l'un de ladite pluralité de dispositifs par l'intermédiaire de ladite interface de communication de courte portée pour l'ajouter au WHAN ;
un module pour envoyer un message de configuration dudit dispositif de configuration audit dispositif de gestion de communication qui contient des informations de configuration relatives au dispositif auquel ladite clé secrète a été envoyée ; et
un module pour entrer lesdites informations de configuration dans ladite base de données de gestion dudit dispositif de communication.

12. Système selon la revendication 11, comprenant en outre :
des moyens pour permettre audit système d'effectuer un procédé selon l'une des revendications 2 à 10.

13. Dispositif de gestion de communication, comprenant :
une base de données de gestion pour stocker des données de gestion relatives au fonctionnement d'un réseau local sans fil, auquel il est fait ci-après référence en tant que WHAN, lesdites données de gestion comprenant, pour chacun d'une pluralité de dispositifs dudit WHAN, son identifiant de dispositif et sa clé secrète correspondante,
une interface de communication de courte portée pour recevoir un message de configuration d'un dispositif de configuration audit dispositif de gestion de communication qui contient des informations de configuration relatives au dispositif dudit WHAN auquel une clé secrète a été envoyée pour ajouter ledit dispositif dudit WHAN audit WHAN,
le dispositif de gestion de communication étant apte à gérer la communication à l'intérieur dudit WHAN en permettant ou en refusant une communication entre les dispositifs appartenant audit WHAN et/ou entre un dispositif dudit WHAN et l'extérieur.

14. Dispositif de gestion de communication selon la revendication 13, comprenant en outre :
un module pour permettre audit dispositif de gestion de communication d'effectuer un procédé selon l'une des revendications 2 à 10.

15. Programme informatique comprenant un code de programme informatique qui, lorsqu'il est exécuté sur un ordinateur, permet audit ordinateur d'effectuer un procédé selon l'une des revendications 2 à 10.
